(19) Europäisches Patentamt

European Patent Office

Office européen des brevets

(11) **EP 3 670 129 A1**

(12) **DEMANDE DE BREVET EUROPEEN**

(43) Date de publication:
**24.06.2020 Bulletin 2020/26**

(51) Int Cl.:
***B29B 15/12*** *(2006.01)*

(21) Numéro de dépôt: **18306722.2**

(22) Date de dépôt: **18.12.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Arkema France 92700 Colombes (FR)**

(72) Inventeurs:
• **HOCHSTETTER, Gilles 92705 Colombes Cedex (FR)**
• **SAVART, Thibault 64170 Lacq (FR)**
• **BABEAU, Arthur 64170 Lacq (FR)**
• **SALINIER, Axel 64170 Lacq (FR)**

(54) **PROCEDE DE FABRICATION D'UN MATERIAU FIBREUX PRE-IMPREGNE DE POLYMERE THERMOPLASTIQUE EN LIT FLUIDISE**

(57) L'invention concerne un procédé de fabrication d'un matériau fibreux pré-imprégné comprenant un matériau en fibres continues et une matrice thermoplastique, où ledit matériau pré-imprégné est réalisé en un un une pluralité de rubans unidirectionnels et où ledit procédé comprend une étape de pré-imprégnation dudit matériau fibreux se présentant sous forme d'une ou plusieurs mèches (81a) par ladite matrice thermoplastique se présentant sous forme de poudre, ladite étape de pré-imprégnation étant effectuée par voie sèche dans une cuve (20) comprenant un lit fluidisé (22) comprenant une pièce d'embarrage lisse (82), et ladite mèche comprenant jusqu'à 2.5% en poids d'ensimage,

ladite mèche (81a) étant en contact avec la surface de ladite pièce d'embarrage lisse (82),

et le contrôle du taux de ladite matrice thermoplastique dans ledit matériau fibreux étant effectué par contrôle du temps de séjour dudit matériau fibreux dans la poudre et par contrôle constant de la tension de ladite mèche (81a) lorsqu'elle pénètre dans le lit fluidisé.

EP 3 670 129 A1

**Description**

La présente invention concerne un procédé de fabrication d'un matériau fibreux pré-imprégné de polymère thermoplastique en lit fluidisé.

Plus particulièrement, l'invention se rapporte à un procédé de fabrication d'un matériau fibreux pré-imprégné comprenant une étape de pré-imprégnation d'un matériau fibreux non ensimé, dé-ensimé ou ensimé, pour la préparation d'un matériau fibreux imprégné, notamment à coeur, de porosité réduite et contrôlée, en vue de l'obtention de rubans (ou tapes) de matériau fibreux imprégné, de dimensions calibrées, directement utilisables pour la fabrication de pièces composites tridimensionnelles.

Dans la présente description, on entend par « matériau fibreux » un assemblage de fibres de renfort. Avant sa pré-imprégnation et sa mise en forme, il se présente sous forme de mèches. Après sa mise en forme et l'imprégnation, notamment à coeur des mèches de fibres, il se présente sous forme de rubans (ou tapes), de bandes, ou de nappes. Lorsque les fibres de renfort sont continues, leur assemblage constitue un tissu ou un non tissé (NCF). Lorsque les fibres sont courtes, leur assemblage constitue un feutre ou un mat de fibre.

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

Le terme « mèche » est également employé pour désigner le matériau fibreux.

De tels matériaux fibreux pré-imprégnés sont notamment destinés à la réalisation de matériaux composites légers pour la fabrication de pièces mécaniques ayant une structure à trois dimensions et possédant de bonnes propriétés mécaniques, et thermiques. Lorsque les fibres sont en carbone ou que la résine est chargée d'additifs adaptés, ces matériaux fibreux sont capables d'évacuer des charges électrostatiques. Ils possèdent donc des propriétés compatibles avec la fabrication de pièces notamment dans les domaines de la mécanique, de l'aéronautique civile ou militaire, et nautique, de l'automobile, du pétrole et du gaz, en particulier l'offshore, du stockage de gaz, de l'énergie, de la santé et du médical, de l'armée et de l'armement, des sports et loisirs, et de l'électronique.

Cependant, l'utilisation de fibres non ensimées est une nécessité pour l'aéronautique et l'offshore. En effet, en particulier pour fabriquer des pièces structurelles et/ou soumises à des environnements chimiques/thermiques extrêmes, il est nécessaire que non seulement le polymère utilisé soit capable de résister aux contraintes de la pièce ; mais il est aussi nécessaire que l'interface fibre/matrice soit la meilleure possible pour une meilleure résistance du composite, aussi bien en transmission d'efforts mécaniques de la résine vers les fibres que de résistance chimique par exemple. Les forces de ces liens entre la matrice et les fibres sont dictées par la qualité d'imprégnation du matériau (porosité limitée) et par la nature des liens physico-chimiques voire mécaniques entre la fibre et la matrice polymère.

Dans le but d'améliorer les liens physico-chimiques entre polymère et fibres, les fabricants de fibres utilisent des ensimages dont la composition et le taux peuvent varier. Or, étant généralement de nature organique (type résine thermodurcissable ou thermoplastique) et très souvent formulés pour l'imprégnation des fibres par des polymères à bas point de fusion ou thermodurcissables à bas point de Tg, les ensimages sont souvent dégradés par les procédés d'imprégnation, notamment pendant les étapes de pré-imprégnation (voie fondue, passage en solution solvantée etc...) et/ou pendant les étapes de fusion de la matrice thermoplastique, notamment lorsqu'elle présente un haut point de fusion (pour un semi-cristalin ou une haute Tg (pour un amorphe ou un thermodurcissable). En outre, la compatibilité chimique entre le polymère de la matrice et l'ensimage n'est pas toujours optimale ; la force d'accroché résultante pouvant être modifiée en positif comme en négatif en comparaison de celle observée avec une fibre non ensimée.

Néanmoins, l'ensimage dans certains cas est indispensable ou incontournable. Une fibre non ensimée est difficilement manipulable. En effet, l'ensimage joue non seulement le rôle de promoteur d'adhésion de la matrice sur la fibre ; mais il sert aussi de protecteur et de liant des fibrilles de carbone ou de verre par exemple afin de la manipuler sans les rompre. Aussi, dans des étapes de tissage, tricotage, tressage, ou d'épanouissement mécanique, l'ensimage préserve l'intégrité de la fibre vis-à-vis du procédé de transformation.

Il apporte aussi une certaine cohérence à la mèche de fibre permettant de la manipuler de manière équilibrée c'est-à-dire sans appliquer des efforts plus conséquents sur certaines fibrilles que sur d'autres.

Enfin, il apporte de la drapabilité dans le cas de fabrication de pièces composites en procédé d'infusion de résine, de RTM (light) etc... Il permet ainsi de placer et de maintenir en forme des tissus ou des mèches de fibres dans un moule en forme, opération préalable à la réalisation de pièces composites selon ces procédés.

Cela pose donc un certain nombre de difficultés pour la fabrication de bandes au moyen d'un procédé de pré-imprégnation par une poudre (ou un mélange de poudres) sèche(s), en particulier dans le cas où chaque mèche est pré-imprégnée de poudre séparément des autres. Dans la plupart des cas, la ou les mèches sont guidées par des pièces d'embarrages (généralement sous forme de rouleaux) placés dans une cuve contenant soit le lit fluidisé, soit une dispersion aqueuse.

Ainsi la demande internationale WO2018115736 décrit-elle un procédé de pré-imprégnation d'un matériau fibreux en lit fluidisé dont le taux de poudre dépend du temps de séjour dans le lit fluide et la tension sur la ou les mèches est contrôlée à l'aide d'un cantre présent avant la cuve comprenant le lit fluidisé.

L'utilisation d'au moins un embarrage (en particulier un rouleau cylindrique de forme convexe, concave ou cylindrique) dans le lit fluidisé permet d'améliorer la pré-imprégnation par rapport aux procédés de l'art antérieur et le matériau fibreux utilisé peut être ensimé ou non ensimé.

Il n'est nullement précisé dans cette demande si les rouleaux utilisés sont lisses ou gorgés (ou crantés).

L'article de Gibson A. et al. (composites manufacturing, Vol. 3, N°4 (1992)) décrit une étape de pré-imprégnation en lit fluidisé d'un matériau fibreux par un polymère thermoplastique comprenant des rouleaux lisses dans le lit fluidisé avec contrôle du taux de fibre au moyen d'un système vibrant placé en sortie de cuve.

Néanmoins, lorsque ces rouleaux sont lisses, le fait que les fibres soient non ensimées conduit à un épanouissement de la mèche de fibres très important et surtout très fluctuant, ce qui impacte directement le taux de poudre emporté par la ou les mèches de fibres et rend ce taux variable et incontrôlé.

Dans des conditions de faible tension, que les fibres soit ensimées ou non, le contrôle du temps de séjour ne suffit plus pour contrôler le taux de poudre et la trop faible tension provoque une torsion et/ou un enroulement des mèches (twist).

Cependant, dans le cas des fibres non ensimées, une tension trop importante des fibres provoque l'endommagement de ces dernières au contact des rouleaux et produisent beaucoup de fibrilles coupées (fuzz en anglais) qui polluent le lit fluidisé et perturbent la qualité de la fluidisation et donc la qualité de pré-imprégnation du tape.

Il est par conséquent nécessaire de pouvoir contrôler le taux de poudre avec des fibres ensimées ou non et ce de manière continue dans le temps sans les endommager.

L'invention a donc pour but de remédier aux inconvénients de l'art antérieur.

L'invention a donc pour objet un procédé de fabrication d'un matériau fibreux pré-imprégné comprenant un matériau fibreux en fibres continues et au moins une matrice polymère thermoplastique, comprenant une étape de pré-imprégnation, en particulier homogène, dudit matériau fibreux se présentant sous forme d'une mèche ou de plusieurs mèches parallèles par au moins une matrice polymère thermoplastique se présentant sous forme de poudre, ladite étape de pré-imprégnation étant effectuée sur un matériau fibreux ensimé ou non dans une cuve comprenant un lit fluidisé muni de rouleaux cylindriques lisses et par contrôle constant de la tension.

L'invention se rapporte également à un ruban unidirectionnel de matériau fibreux imprégné, en particulier ruban enroulé sur bobine, caractérisé en ce qu'il est obtenu par un procédé tel que défini ci-dessus.

L'invention porte en outre sur une utilisation du ruban tel que défini ci-dessus dans la fabrication de pièces en trois dimensions. Ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la sécurité et de l'électronique.

L'invention concerne également une pièce composite en trois dimensions, caractérisée en ce qu'elle résulte de l'utilisation d'au moins un ruban unidirectionnel de matériau fibreux imprégné tel que défini ci-dessus.

L'invention a pour objet un procédé de fabrication d'un matériau fibreux pré-imprégné comprenant un matériau fibreux en fibres continues et au moins une matrice polymère thermoplastique, caractérisé en ce que ledit matériau fibreux pré-imprégné est réalisé en un ruban unique unidirectionnel ou en une pluralité de rubans parallèles unidirectionnels et en ce que ledit procédé comprend une étape de pré-imprégnation, en particulier homogène, dudit matériau fibreux se présentant sous forme d'une mèche (81a) ou de plusieurs mèches parallèles par ladite au moins une matrice polymère thermoplastique se présentant sous forme de poudre, ladite étape de pré-imprégnation étant effectuée par voie sèche dans une cuve (20) comprenant un lit fluidisé (22) comprenant au moins une pièce d'embarrage lisse (82), et ladite mèche ou lesdites mèches comprenant jusqu'à 2,5% en poids d'ensimage,

ladite mèche (81a) ou lesdites mèches étant en contact avec une partie ou la totalité de la surface de ladite au moins une pièce d'embarrage lisse (82),

et le contrôle du taux de ladite au moins une matrice polymère thermoplastique dans ledit matériau fibreux étant effectué par contrôle du temps de séjour dudit matériau fibreux dans la poudre et par contrôle constant de la tension de ladite mèche (81a) ou desdites mèches lorsqu'elle(s) pénètre(nt) dans le lit fluidisé,

ledit lit fluidisé étant dépourvu de pièce d'embarrage gorgé.

Avantageusement, le procédé de l'invention est à l'exclusion de tout procédé électrostatique en charge volontaire.

Selon une première possibilité, ladite mèche (81a) ou lesdites mèches comprend(comprennent) moins de 0,1% en poids d'ensimage, en particulier ladite mèche (81a) ou lesdites mèches est(sont) non ensimées.

Le terme « ensimage » désigne les traitements de surface appliqués aux matériaux fibreux lors de leur fabrication. Il peut aussi désigner un prétraitement fugace en préambule de l'étape de pré-imprégnation, qu'il soit fait directement en ligne avec l'imprégnation ou non. Il peut aussi désigner un prétraitement fugace en préambule de l'étape de pré-imprégnation, qu'il soit fait directement en ligne avec l'imprégnation ou non.

Ils sont généralement de nature organique (type résine thermodurcissable ou thermoplastique) et très souvent formulés pour la pré-imprégnation des fibres de renfort de polymères à bas point de fusion Tf ou thermodurcissables à bas point de Tg.

Ces ensimages sont également utiles pour protéger les fibres sèches d'un endommagement lors d'un contact avec un système de guidage.

Ledit matériau fibreux peut donc comprendre jusqu'à 0,1% en poids d'un matériau de nature organique (type résine thermodurcissable ou thermoplastique) dénommé ensimage.

Dans le cas d'un prétraitement fugace réalisé par l'imprégnateur par exemple en préambule de l'étape la pré-imprégnation des fibres de renfort, l'ensimage peut être un liquide organique comme de l'eau, un alcool à bas ou haut poids moléculaire (éthanol, méthanol, isopropanol par exemple), une cétone (acétone etc...) qui jouera le rôle d'ensimage fugace ; c'est-à-dire qu'il sera présent un court laps de temps en contact avec la fibre pour permettre sa manipulation à l'état « sec » (i.e. avant la pré-imprégnation) et qu'il sera ensuite extrait du matériau composite pour ne pas perturber les caractéristiques finales du composite.

Avantageusement, ladite mèche (81a) ou lesdites mèches est(sont) non ensimées. Cela signifie que ladite mèche (81a) ou lesdites mèches est(sont) soit substantiellement dépourvue(s) d'ensimage parce que le matériau fibreux a été au préalable dé-ensimé ou soit dépourvue(s) d'ensimage parce que le matériau fibreux d'origine est non ensimé.

Pour le dé-ensimage, plusieurs solutions existent:

- chauffage en milieu chargé en humidité car généralement les ensimages sont déposés en solution base aqueuse lors de la fabrication des fibres car généralement c'est un traitement préalable des bobines, sinon il est nécessaire de mettre en ligne avec le procédé de pré-imprégnation :
- une dégradation thermique
- un plongeon dans un solvant de l'ensimage (eau ou autre solvant organique) Avantageusement, dans cette première possibilité, la tension de ladite mèche (81a) ou desdites mèches lorsqu'elle(s) pénètre(nt) dans le lit fluidisé est supérieure à 1000g.

Avantageusement, ladite tension de ladite mèche (81a) ou desdites mèches lorsqu'elle(s) pénètre(nt) dans le lit fluidisé est comprise de 1000 à 1500g, en particulier de **1000 à 1200g.**

Selon une seconde possibilité, ladite mèche (81a) ou lesdites mèches est(sont) ensimée(s) et comprend(comprennent) de 0,1% jusqu'à 2,5% en poids d'ensimage.

Avantageusement, dans cette seconde possibilité, la tension de ladite mèche (81a) ou desdites mèches lorsqu'elle(s) pénètre(nt) dans le lit fluidisé est jusqu'à 1000g.

Avantageusement, ladite tension de ladite mèche (81a) ou desdites mèches lorsqu'elle(s) pénètre(nt) dans le lit fluidisé est comprise de 100 à 1000g, en particulier de 500 à 1000g.

Avantageusement, dans cette deuxième possibilité, ladite étape de pré-imprégnation est effectuée avec épanouissement simultané de ladite mèche (81a) ou desdites mèches entre l'entrée et la sortie dudit lit fluidisé (22).

Avantageusement, quelle que soit les possibilités une ou deux, le diamètre moyen D50 en volume des particules de poudre de polymère thermoplastique est compris de 30 à 300 $\mu$m, notamment de 50 à 200 $\mu$m, plus particulièrement de 70 à 200$\mu$m.

L'expression « temps de séjour dans la poudre» signifie le temps durant lequel la mèche est en contact avec ladite poudre dans le lit fluidisé.

Les Inventeurs ont trouvé de manière inattendue que lorsque l'étape de pré-imprégnation nécessitait la présence d'un ou plusieurs embarrages lisses, en particulier un(des) rouleau(x) lisses dans le lit fluidisé, en fonction de l'ensimage ou non du matériau fibreux, le contrôle du temps de séjour dans la poudre n'était plus suffisant pour pré-imprégner le matériau fibreux par la matrice polymère thermoplastique, en particulier de manière homogène avec un taux de poudre (résine) bien contrôlé et que le contrôle du taux de poudre nécessitait un contrôle simultané de la tension dudit matériau fibreux à l'entrée du lit fluidisé avec notamment une forte tension, c'est-à-dire une tension de ladite mèche (81a) ou desdites mèches lorsqu'elle(s) pénètre(nt) dans le lit fluidisé supérieure à 1000g lorsque les mèches sont non ensimées ou faiblement ensimées, ou une tension faible, c'est-à-dire une tension de ladite mèche (81a) ou desdites mèches lorsqu'elle(s) pénètre(nt) dans le lit fluidisé inférieure à 1000g lorsque les mèches sont non ensimées ou faiblement ensimées.

Il existe une tension critique dénommée Tc qui conduit à l'endommagement des fibres (fuzz) et une tension Tc' au-delà de laquelle la pré-imprégnation devient impossible car la tension bloque alors l'épanouissement de la mèche dans le lit fluidisé. Généralement, dans le cas des fibres non ensimées, Tc est < à Tc'.

Il existe également une Tmin qui est la tension en dessous de laquelle les twists apparaissent.

Avantageusement, lorsque les mèches sont ensimées, la tension T de ladite mèche (81a) ou desdites mèches lorsqu'elle(s) pénètre(nt) dans le lit fluidisé est inférieure à Tc.

Avantageusement, lorsque les mèches sont ensimées, la tension T de ladite mèche (81a) ou desdites mèches lorsqu'elle(s) pénètre(nt) dans le lit fluidisé est supérieure à Tmin.

Avantageusement, lorsque les mèches sont ensimées, la tension T de ladite mèche (81a) ou desdites mèches lorsqu'elle(s) pénètre(nt) dans le lit fluidisé est inférieure à Tc et supérieure à Tmin.

Avantageusement, lorsque les mèches sont non ensimées, la tension T de ladite mèche (81a) ou desdites mèches lorsqu'elle(s) pénètre(nt) dans le lit fluidisé est supérieure à Tc.

Dans toute la description, le matériau fibreux après passage dans le lit fluidisé est dénommé matériau fibreux pré-imprégné et après chauffage et/ou calandrage, il est dénommé matériau fibreux imprégné.

Les mesures du taux de fibre et de la porosité sont effectuées sur le matériau fibreux imprégné, et donc après chauffage et/ou calandrage.

Le terme « homogène » signifie que la pré-imprégnation est uniforme et qu'il n'existe pas de fibres sèches en surface du matériau fibreux pré-imprégné.

**Matrice polymère**

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser dans un dispositif tel qu'une cuve, notamment en lit fluidisé.

Le dispositif sous forme de cuve, notamment en lit fluidisé peut être ouvert ou fermé. De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant ou un mélange de ceux-ci.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au coeur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de pré-imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, lorsque ledit polymère thermoplastique est en mélange, il est additionné sous forme de poudre obtenue au préalable par « dry blend » ou compound broyé ou directement dans la cuve sous forme de « dry blend in situ ».

Avantageusement, il est additionné sous forme de poudre obtenue au préalable par « dry blend » ou directement dans la cuve sous forme de « dry blend in situ» et le mélange est un mélange de PEKK et de PEI.

Avantageusement, lorsque ledit polymère est un mélange de deux polymères P1 et P2, la proportion en poids de polymère P1 et P2 est comprise de 1-99% à 99-1%.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau des embarrages dans le four et/ou lors de la mise en oeuvre de la tape dans le procédé final de fabrication de la pièce composite.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : -NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, de structure non polymère, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6000, en particulier de 2500 à 6000.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les polymères de constitution de la matrice sont choisis parmi les Polyamides (PA), en particulier choisis parmi les polyamides aliphatiques, notamment le PA11 et le PA12, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère dont la température de transition vitreuse est telle que Tg≥ 80°C ou un polymère semi-cristallin dont la température de fusion Tf ≥ 150°C.

Avantageusement, ledit polymère thermoplastique est :

- un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,
un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, et les copolymères blocs, notamment polyamide/polyéther (PEBA).

T correspond à l'acide téréphtalique, MXD correspond à la m-xylylène diamine, MPMD correspond à la méthylpentaméthylène diamine et BAC correspond au bis(aminométhyl)cyclohexane.

**Matériau fibreux :**

Concernant les fibres de constitution dudit matériau fibreux, ce sont notamment des fibres d'origine minérale, organique ou végétale.

Comme déjà dit plus haut, selon une première possibilité, ledit matériau fibreux peut donc comprendre moins de 0,1% en poids d'un matériau de nature organique (type résine thermodurcissable ou thermoplastique) dénommé ensimage.

Avantageusement, ladite mèche (81a) ou lesdites mèches est(sont) non ensimées.

Cela signifie que ladite mèche (81a) ou lesdites mèches est(sont) soit substantiellement dépourvue(s) d'ensimage parce que le matériau fibreux a été au préalable dé-ensimé ou soit dépourvue(s) d'ensimage parce que le matériau fibreux d'origine est non ensimé.

Le terme « ensimage » désigne les traitements de surface appliqués aux matériaux fibreux lors de leur fabrication.

Ils sont généralement de nature organique (type résine thermodurcissable ou thermoplastique) et très souvent formulés pour la pré-imprégnation de polymères à bas point de fusion ou thermodurcissables à bas point de Tg.

Pour le dé-ensimage, plusieurs solutions existent:

- chauffage en milieu chargé en humidité car généralement les ensimages sont déposés en solution base aqueuse lors de la fabrication des fibres car généralement c'est un traitement préalable des bobines, sinon il est nécessaire de mettre en ligne avec le procédé de pré-imprégnation :

    - une dégradation thermique
    - un plongeon dans un solvant de l'ensimage (eau ou autre solvant organique) Dans une seconde possibilité, ladite mèche (81a) ou lesdites mèches est(sont) ensimée(s) et comprend de 0,1% à jusqu'à 2,5% en poids d'ensimage.

Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation par la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnées de poudre polymère thermoplastique et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Les matériaux imprégnés, sont aussi appelés « prêts à l'emploi », et sont obtenus à partir du matériau fibreux pré-imprégné, après fusion de la poudre ou du mélange de poudre. Dans ce type de matériaux imprégnés, le polymère ou mélange de polymères thermoplastiques d'imprégnation est réparti de manière à obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une réduction de la porosité améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégnée par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux imprégné obtenu après fusion de la poudre présente dans la mèche pré-imprégnée et imprégnation à coeur des fibres, est compris de 0% et 30%, notamment de 1% à 10%, en particulier de 1% à 5%.

Le taux de porosité correspond au taux de porosité fermée et peut être déterminée soit par microscopie électronique, soit comme étant l'écart relatif entre la densité théorique et la densité expérimentale dudit matériau fibreux pré-imprégné tel que décrit dans la partie exemples de la présente invention.

**Etape de pré-imprégnation** :

Un exemple d'unité de mise en oeuvre du procédé de fabrication est décrit dans la demande internationale WO 2015/121583 et est représenté figure 1, à l'exception de la cuve (autrement appelée cuve de pré-imprégnation qui dans le cas de l'invention comprend un lit fluidisé muni d'une pièce d'embarrage (figure 3) qui peut être un rouleau cylindrique lisse (figure 4)).

Le rouleau cylindrique peut être fixe ou en rotation contrôlée, c'est-à-dire non libre.

Plusieurs rouleaux peuvent être présents et s'ils sont en rotation contrôlée, ils peuvent être co-rotatif ou contra-rotatif.

L'étape de pré-imprégnation du matériau fibreux est réalisée par passage d'une ou plusieurs mèches dans un dispositif de pré-imprégnation en continu, comprenant une cuve (20), comprenant un lit fluidisé (22) de poudre polymère.

La poudre de polymère(s) ou polymère est mise en suspension dans un gaz G (de l'air par exemple) introduit dans la cuve et circulant dans la cuve à travers une trémie 21. La ou les mèches sont mises en circulation dans ce lit fluidisé 22.

La cuve peut avoir toute forme, notamment cylindrique ou parallélépipédique, en particulier un parallélépipède rectangle ou un cube, avantageusement un parallélépipède rectangle.

La cuve peut être une cuve ouverte ou fermée. Avantageusement, elle est ouverte. Dans le cas où la cuve est fermée, elle est alors équipée d'un système d'étanchéité pour que la poudre polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à imprégner est déroulée d'un dispositif (10) à dévidoirs (11) sous la traction engendrée par des cylindres (non représentés). De préférence, le dispositif (10) comprend une pluralité de dévidoirs (11), chaque dévidoir permettant de dérouler une mèche à imprégner. Ainsi, il est possible d'imprégner plusieurs mèches de fibres simultanément. Chaque dévidoir (11) est pourvu d'un frein (non représenté) de manière à appliquer une tension sur chaque mèche de fibres. Dans ce cas, un module d'alignement (12) permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

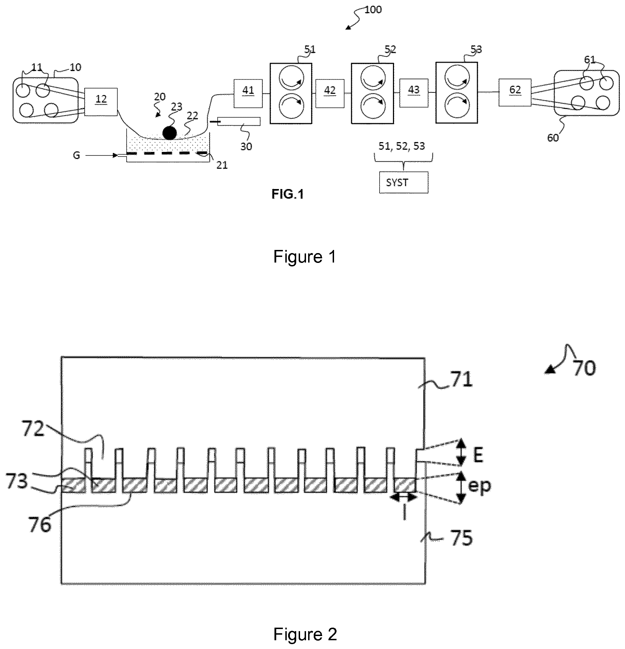

La mèche de fibres ou les mèches de fibres parallèles passent alors dans une cuve (20), comprenant en particulier un lit fluidisé (22), munie d'une pièce d'embarrage lisse qui est un rouleau cylindrique lisse (23) dans le cas de la figure 1. La mèche de fibres ou les mèches de fibres parallèles ressort(ent) ensuite de la cuve après pré-imprégnation après contrôle du temps de séjour dans la poudre et par contrôle constant de la tension de ladite mèche (81a) ou desdites mèches lorsqu'elle(s) pénètre(nt) dans le lit fluidisé, ledit lit fluidisé étant dépourvu de pièce d'embarrage gorgé.

Avantageusement, selon une première possibilité, ladite mèche (81a) ou lesdites mèches comprend moins de 0,1% en poids d'ensimage, en particulier ladite mèche (81a) ou lesdites mèches est(sont) non ensimée(s) ou desensimée(s) et la tension de ladite mèche (81a) ou desdites mèches lorsqu'elle(s) pénètre(nt) dans le lit fluidisé est supérieure à 1000g.

Avantageusement, ladite tension de ladite mèche (81a) ou desdites mèches lorsqu'elle(s) pénètre(nt) dans le lit fluidisé est comprise de 1000 à 1200g.

Selon une seconde possibilité, ladite mèche (81a) ou lesdites mèches est(sont) ensimée(s) et comprend de 0,1% jusqu'à 2,5% en poids d'ensimage.

Avantageusement, dans cette seconde possibilité, la tension de ladite mèche (81a) ou desdites mèches lorsqu'elle(s) pénètre(nt) dans le lit fluidisé est jusqu'à 1000g.

Avantageusement, ladite tension de ladite mèche (81a) ou desdites mèches lorsqu'elle(s) pénètre(nt) dans le lit fluidisé est comprise de 100 à 1000g, en particulier de 500 à 1000g.

Avantageusement, dans cette seconde possibilité, ladite étape de pré-imprégnation est effectuée avec épanouissement simultané de ladite mèche (81a) ou desdites mèches entre l'entrée et la sortie dudit lit fluidisé (22).

La tension de ladite mèche peut être mesurée soit de manière manuelle et intermittente en plusieurs points de la ligne grâce à un tensiomètre, soit grâce à des jauges de contraintes intégrées dans des éléments en contact avec les mèches.

Le choix du couple tension et largeur de gorge sera optimum lorsque la tension sera minimum et que la pré-imprégnation de la mèche sera bonne, au-delà cependant de 100g, préférentiellement au-delà de 200g, en sortie de cantre, de façon à éviter la formation et/ou le passage de twists.

Par pièce d'embarrage lisse, il faut entendre tout système sur lequel la mèche à la possibilité de défiler dans la cuve mais il est bien évident que la pièce d'embarrage lisse n'est pas une pièce d'embarrage gorgée.

La pièce d'embarrage peut avoir n'importe quelle forme à partir du moment où elle est lisse.

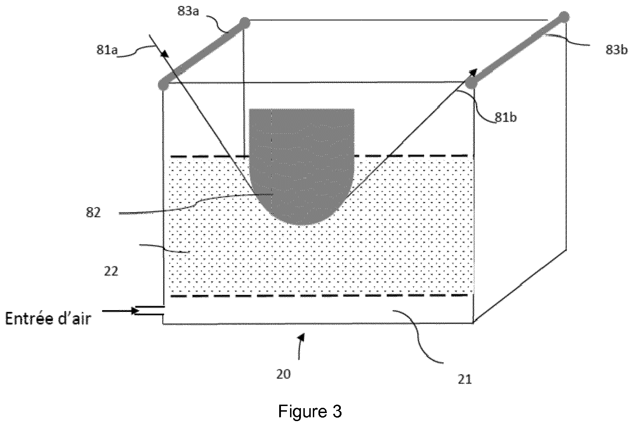

Un exemple de pièce d'embarrage, sans restreindre l'invention à celui-ci, est détaillé dans la figure 3.

Cette pré-imprégnation est réalisée afin de permettre à la poudre polymère de pénétrer au coeur de la mèche de fibre et d'adhérer aux fibres suffisamment pour supporter le transport de la mèche poudrée hors de la cuve. La ou les mèches pré-imprégnées par la poudre, est (sont) dirigée(s) ensuite vers un dispositif de calandrage chauffant, avec possibilité de préchauffage avant calandrage et éventuel chauffage post-calandrage.

De manière facultative, cette étape de pré-imprégnation peut être complétée par une étape de recouvrement de la mèche ou des mèches pré-imprégnées, juste en sortie de la cuve (20) de pré-imprégnation par la poudre en lit fluidisé (22), et juste avant l'étape de mise en forme par calandrage. Pour cela, le sas de sortie de la cuve (20) (lit fluidisé 22) peut être connecté à un dispositif de recouvrement (30) pouvant comporter une tête d'équerre de recouvrement, comme cela est également décrit dans le brevet EP0406067. Le polymère de recouvrement peut être identique ou différent de la poudre polymère en lit fluidisé. De préférence, il est de même nature. Un tel recouvrement permet non seulement de compléter l'étape de pré-imprégnation des fibres pour obtenir un taux volumique final de polymère dans la gamme souhaitée et éviter la présence à la surface de la mèche pré-imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

Le procédé de l'invention comme indiqué ci-dessus est avantageusement effectué par voie sèche à l'exclusion d'un procédé électrostatique en charge volontaire.

L'expression « en charge volontaire » signifie qu'une différence de potentiel est appliquée entre le matériau fibreux et la poudre. La charge est notamment contrôlée et amplifiée. Les grains de poudres imprègnent alors le matériau fibreux par attraction de la poudre chargée à l'opposé de la fibre. On peut charger électriquement, négativement ou positivement, la poudre par différents moyens (différence de potentiel entre deux électrodes métalliques, frottement mécanique sur parties métalliques etc...) et charger la fibre inversement (positivement ou négativement).

Le procédé de l'invention n'exclut pas la présence de charges électrostatiques qui pourraient apparaitre par frottement du matériau fibreux sur les éléments de l'unité de mise en oeuvre avant ou au niveau de la cuve mais qui sont en tout état de cause des charges involontaires.

Avantageusement, le taux de fibres dans ledit matériau fibreux imprégné est compris de 45 à 65 % en volume, de préférence de 50 à 60% en volume, en particulier de 54 à 60% en volume.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Avantageusement, le taux de fibres dans ledit matériau fibreux imprégné est compris de 50 à 60%, en particulier de 54 à 60% % en volume.

Avantageusement, le temps de séjour dans la poudre est compris de 0,01s à 10s, préférentiellement de 0,1s à 5s, et en particulier de 0,1s à 3s.

Le temps de séjour du matériau fibreux dans la poudre est essentiel pour contrôler le taux de résine, dudit matériau fibreux.

En deçà de 0,1s, le taux de résine sera trop faible pour ensuite, lors de l'étape de fusion de la poudre, pouvoir imprégner à coeur les fibres.

Au-delà de 10s, le taux de matrice polymère imprégnant le matériau fibreux est trop important et les propriétés mécaniques du matériau fibreux imprégné seront mauvaises.

Avantageusement, la cuve utilisée dans le procédé de l'invention comprend un lit fluidisé et ladite étape de pré-imprégnation est effectuée avec épanouissement simultané de ladite mèche ou desdites mèches entre l'entrée et la sortie de ladite cuve.

L'expression « entrée de la dite cuve» correspond à la tangente verticale du bord de la cuve qui comprend le lit fluidisé.

L'expression « sortie de ladite cuve» correspond à la tangente verticale de l'autre bord de la cuve qui comprend le lit fluidisé.

En fonction de la géométrie de la cuve, la distance entre l'entrée et la sortie de celle-ci correspond donc au diamètre dans le cas du cylindre, au côté dans le cas d'un cube ou à la largeur ou la longueur dans le cas d'un parallélépipède rectangle.

L'épanouissement consiste à singulariser au maximum chaque filament constitutif de ladite mèche des autres filaments qui l'entourent dans son plus proche espace. Il correspond à l'étalement transverse de la mèche.

En d'autres termes, l'étalement transverse ou la largeur de la mèche augmente entre l'entrée du lit fluidisé (ou de la cuve comprenant le lit fluidisé) et la sortie du lit fluidisé (ou de la cuve comprenant le lit fluidisé) et permet ainsi une pré-imprégnation homogène du matériau fibreux.

Le lit fluidisé peut être ouvert ou fermé, en particulier il est ouvert.

Avantageusement, le lit fluidisé comprend au moins une pièce d'embarrage, ladite mèche ou lesdites mèches étant en contact avec une partie ou la totalité de la surface de ladite au moins une pièce d'embarrage.

La figure 3 détaille une cuve (20) comprenant un lit fluidisé (22) avec une pièce d'embarrage, réglable en hauteur (82).

La mèche (81a) correspond à la mèche avant de pré-imprégnation qui est en contact avec une partie ou la totalité de la surface de ladite au moins une pièce d'embarrage et défile donc partiellement ou totalement à la surface de la pièce d'embarrage (82), ledit système (82) étant immergé dans le lit fluidisé où la pré-imprégnation s'effectue. Ladite mèche ressort ensuite de la cuve (81b) après contrôle du temps de séjour dans la poudre.

La dite mèche (81a) peut être en contact ou non avec le bord de la cuve (83a) qui peut être un rouleau rotatif ou fixe ou un bord parallélépipédique.

Avantageusement, la dite mèche (81a) est en contact ou non avec le bord de la cuve (83a).

Avantageusement, le bord de la cuve (83b) est un rouleau, notamment cylindrique et rotatif.

La dite mèche (81b) peut être en contact ou non avec le bord de la cuve (83b) qui peut être un rouleau, notamment cylindrique et rotatif ou fixe, ou un bord parallélépipédique.

Avantageusement, la dite mèche (81b) est en contact avec le bord de la cuve (83b). Avantageusement, le bord de la cuve (83b) est un rouleau, notamment cylindrique et rotatif.

Avantageusement, la dite mèche (81a) est en contact avec le bord de la cuve (83a) et le bord de la cuve (83b) est un rouleau, notamment cylindrique et rotatif et la dite mèche (81b) est en contact avec le bord de la cuve (83b), et le bord de la cuve (83b) est un rouleau, notamment cylindrique et rotatif.

Avantageusement, ladite pièce d'embarrage est perpendiculaire à la direction de ladite mèche ou desdites mèches.

Avantageusement, ledit épanouissement de ladite mèche ou desdites mèches est effectué au moins au niveau de ladite au moins une pièce d'embarrage.

L'épanouissement de la mèche s'effectue donc principalement au niveau de la pièce d'embarrage mais peut également s'effectuer au niveau du ou des bords de la cuve s'il y a contact entre la mèche et ledit bord.

Dans un autre mode de réalisation, ladite au moins une pièce d'embarrage est un rouleau cylindrique lisse de forme convexe, concave ou cylindrique.

La forme convexe est favorable à l'épanouissement alors que la forme concave est défavorable à l'épanouissement bien qu'il s'effectue néanmoins.

L'expression « rouleau cylindrique lisse » signifie que la mèche qui défile s'appuie partiellement ou totalement sur la surface dudit rouleau cylindrique lisse, ce qui induit l'épanouissement de la dite mèche.

Avantageusement, ledit au moins un rouleau cylindrique lisse est de forme cylindrique et le pourcentage d'épanouissement de ladite mèche ou desdites mèches entre l'entrée et la sortie dudit lit fluidisé est compris de 100% à 1000%, préférentiellement de 100% à 800% préférentiellement de 100% à 500%, préférentiellement de 100% à 200%.

Le pourcentage d'épanouissement est défini comme (Lf-Li)/Li*100, ou Li et Lf sont les largeurs avant et après épanouissement.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres ou filaments dans la mèche, de leur diamètre moyen et de leur cohésion.

Le diamètre dudit au moins un rouleau cylindrique lisse est compris de 3 mm à 500 mm, préférentiellement de 10 mm à 100 mm, en particulier de 20 mm à 60 mm.

Au-dessous de 3 mm, la déformation de la fibre induite par le rouleau cylindrique lisse est trop importante.

Avantageusement, le rouleau cylindrique lisse est cylindrique et non cannelé et en particulier est métallique.

Lorsque la pièce d'embarrage est au moins un rouleau cylindrique lisse, selon une première variante, un seul rouleau cylindrique lisse est présent dans le lit fluidisé et ladite pré-imprégnation est effectuée au niveau de l'angle $\alpha_1$ formé par ladite mèche ou lesdites mèches entre l'entrée dudit rouleau cylindrique lisse et la tangente verticale audit rouleau cylindrique lisse.

L'angle $\alpha_1$ formé par ladite mèche ou lesdites mèches entre l'entrée dudit rouleau cylindrique lisse et la tangente verticale audit rouleau cylindrique lisse permet la formation d'une zone dans laquelle la poudre va se concentrer conduisant ainsi à un « effet de coin » qui avec l'épanouissement simultané de la mèche par ledit rouleau cylindrique lisse permet une pré-imprégnation sur une largeur plus importante de mèche et donc une pré-imprégnation améliorée comparée aux techniques de l'art antérieur améliorée. Le couplage avec le temps de séjour contrôlé permet alors une pré-imprégnation homogène.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau cylindrique lisse cylindrique est réglable permettant ainsi de pouvoir positionner la fibre verticalement.

On ne sortirait pas du cadre de l'invention si la paroi de la cuve était percée de manière à pouvoir permettre la sortie de la mèche.

Avantageusement, le bord de la cuve (83a) est équipé d'un rouleau, notamment cylindrique et rotatif sur lequel défile ladite mèche ou les dites mèches conduisant ainsi à un épanouissement préalable.

Avantageusement, un ou plusieurs embarrages sont présents en aval de la cuve comprenant le lit fluidisé au niveau duquel ou desquels l'épanouissement est initié.

Avantageusement, l'épanouissement est initié au niveau du ou desdits embarrages ci-dessus définis et se poursuit au niveau du bord de la cuve (83a).

L'épanouissement est alors maximum après passage au niveau du ou des rouleaux cylindriques lisses.

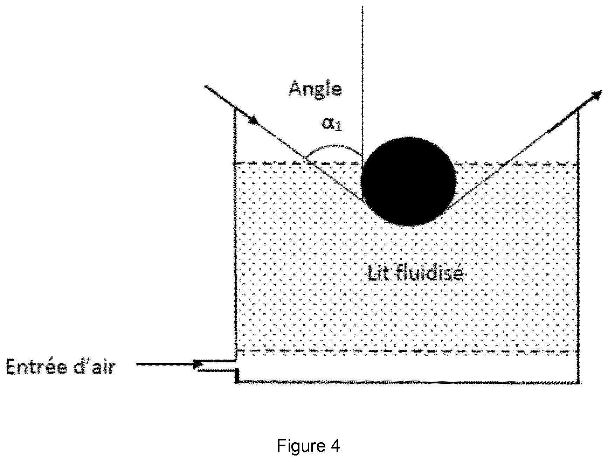

La figure 4 décrit un mode de réalisation, sans être limité à celui-ci, à un seul rouleau cylindrique lisse, avec une cuve (20) comprenant un lit fluidisé (22) dans lequel un seul rouleau cylindrique lisse cylindrique est présent et montrant l'angle $\alpha_1$.

Les flèches au niveau de la fibre indiquent le sens de défilement de la fibre.

Avantageusement, le niveau de ladite poudre dans ledit lit fluidisé est au moins situé à la mi-hauteur dudit rouleau cylindrique lisse.

Il est bien évident que « l'effet de coin » provoqué par l'angle $\alpha_1$ favorise la pré-imprégnation sur une face mais l'épanouissement de ladite mèche obtenu grâce au rouleau cylindrique lisse permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau cylindrique lisse $R_1$ et la tangente verticale au rouleau cylindrique lisse $R_1$ mais l'épanouissement permet aussi de pré-imprégner l'autre face.

L'angle $\alpha_1$ est tel que défini ci-dessus.

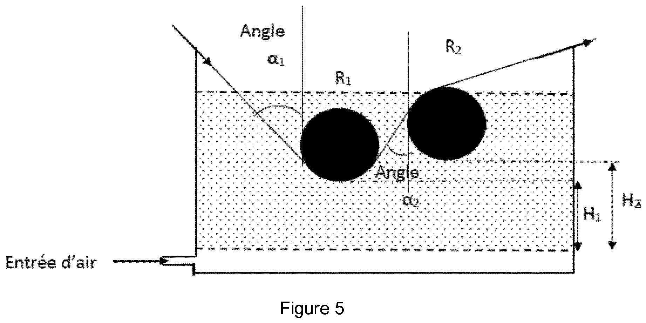

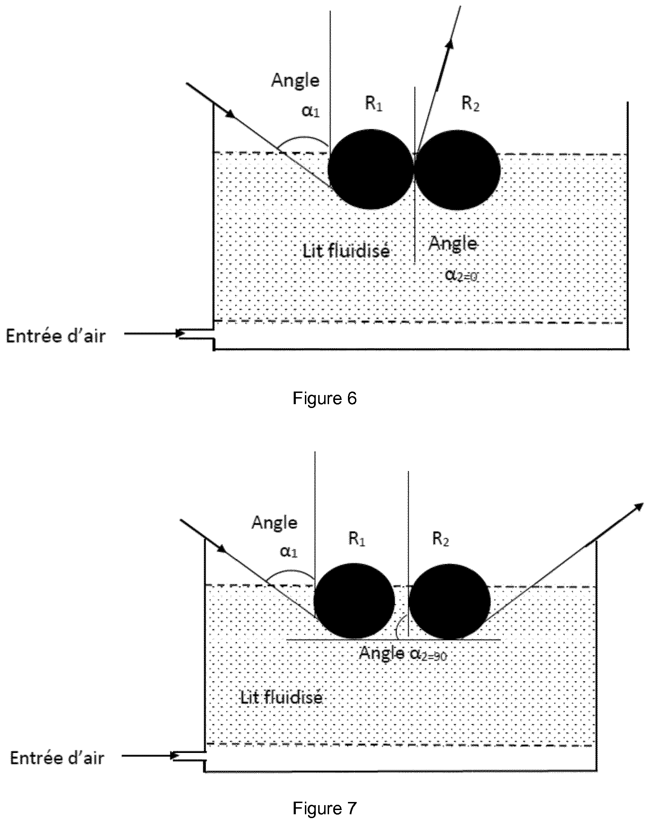

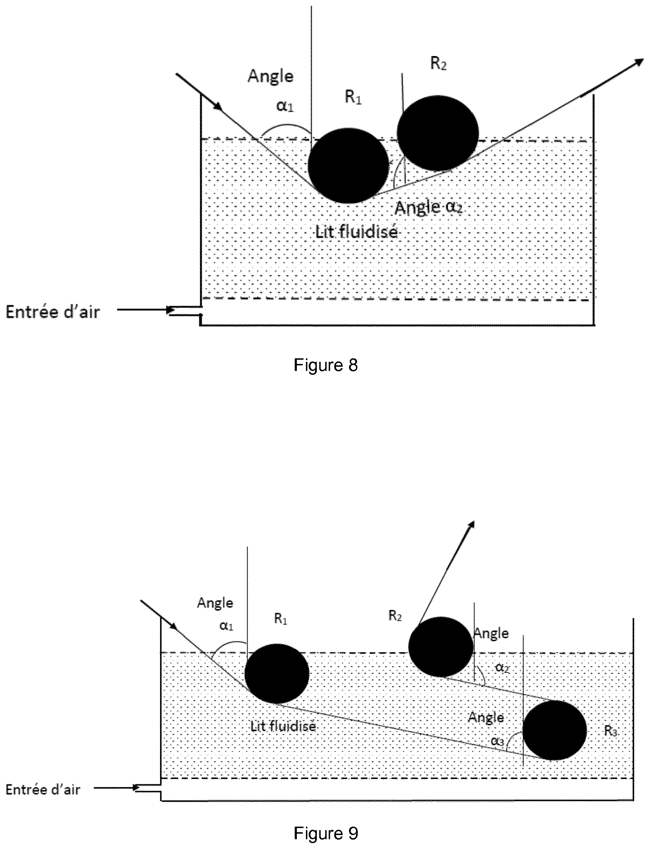

Selon une deuxième variante, lorsque la pièce d'embarrage est au moins un rouleau cylindrique lisse, alors deux rouleaux cylindriques lisses $R_1$ et $R_2$ sont dans ledit lit fluidisé et ladite pré-imprégnation est effectuée au niveau de l'angle $\alpha_1$ formé par ladite mèche ou lesdites mèches entre l'entrée dudit rouleau cylindrique lisse $R_1$ et la tangente verticale audit rouleau cylindrique lisse $R_1$ et/ou au niveau de l'angle $\alpha_2$ formé par ladite mèche ou lesdites mèches entre l'entrée dudit rouleau cylindrique lisse $R_2$ et la tangente verticale audit rouleau cylindrique lisse $R_2$, ledit rouleau cylindrique lisse $R_1$ précédant ledit rouleau cylindrique lisse $R_2$ et ladite mèche ou lesdites mèche pouvant passer au-dessus (figure 5 et 6) ou en dessous (figure 7 et 8) du rouleau $R_2$.

Avantageusement, les deux rouleaux cylindriques lisses sont de forme identique ou différente et choisie parmi une forme convexe, concave ou cylindrique.

Avantageusement, les deux rouleaux cylindriques lisses sont identiques et cylindriques non cannelés et en particulier métalliques.

Le diamètre des deux rouleaux cylindriques lisses peut aussi être identique ou différent et est tel que défini ci-dessus.

Avantageusement, le diamètre des deux rouleaux cylindriques lisses est identique.

Les deux rouleaux cylindriques lisses $R_1$ et $R_2$ peuvent être au même niveau l'un par rapport à l'autre et par rapport au fond de la cuve (figures 6 et 7) ou décalés l'un par rapport à l'autre et par rapport au fond de la cuve, la hauteur du rouleau cylindrique lisse $R_1$ étant supérieure ou inférieure à celle du rouleau cylindrique lisse $R_2$ par rapport au fond de la cuve (figures 5 et 8).

Avantageusement, lorsque les deux rouleaux sont à des hauteurs différentes et que la mèche passe au-dessus du rouleau $R_2$, alors $\alpha_2$ est compris de 0 à 90°.

Avantageusement, ladite pré-imprégnation s'effectue donc au niveau de l'angle $\alpha_1$ formé par ladite mèche ou lesdites mèches entre l'entrée dudit rouleau cylindrique lisse $R_1$ et la tangente verticale audit rouleau cylindrique lisse sur une face de ladite mèche et au niveau de l'angle $\alpha_2$ formé par ladite mèche ou lesdites mèches entre l'entrée dudit rouleau cylindrique lisse $R_2$ et la tangente verticale audit rouleau cylindrique lisse $R_2$ sur la face opposée de la dite mèche ce qui s'obtient en passant au-dessus du rouleau $R_2$.

Avantageusement, ladite mèche dans ce mode de réalisation est sujette à un épanouissement au niveau de chaque angle $\alpha_1$ et $\alpha_2$.

La figure 6 décrit un mode de réalisation, sans être limité à celui-ci, à deux rouleaux cylindriques lisses $R_1$ et $R_2$, $R_1$ précédant $R_2$, avec une cuve (20) comprenant un lit fluidisé (22) dans lequel les deux rouleaux cylindriques lisses cylindriques, au même niveau et côte à côte, sont présents et montrant le cas où ladite ou lesdites mèches ressortent entre lesdits rouleaux cylindriques lisses $R_1$ et $R_2$.

Dans ce cas, l'angle $\alpha_2$ est égal à 0 et ladite ou lesdites mèches passent par-dessus le rouleau $R_2$.

Les flèches au niveau de la fibre indiquent le sens de défilement de la fibre.

De manière alternative, ladite mèche ou lesdites mèches défile(nt) en entrée entre lesdits rouleaux cylindriques lisses $R_1$ et $R_2$ et ressort(ent) après avoir été en contact avec une partie ou la totalité de la surface dudit rouleau cylindrique lisse $R_2$

Avantageusement, ladite mèche ou lesdites mèches est(sont) en contact en entrée avec une partie ou la totalité de la surface dudit rouleau cylindrique lisse $R_1$ et ressort(ent) à l'extérieur du rouleau cylindrique lisse $R_2$ après avoir été en contact avec une partie ou la totalité de la surface dudit rouleau cylindrique lisse $R_2$, sous le rouleau $R_2$, l'angle $\alpha_2$ étant formé par ladite mèche ou lesdites mèches entre l'entrée dudit rouleau cylindrique lisse $R_2$ et la tangente verticale audit rouleau cylindrique lisse $R_2$. Dans ce cas, l'angle $\alpha_2$ = 90°.

Ladite pré-imprégnation s'effectue donc au niveau de l'angle $\alpha_1$ formé par ladite mèche ou lesdites mèches entre l'entrée dudit rouleau cylindrique lisse $R_1$ et la tangente verticale audit rouleau cylindrique lisse sur une face de ladite mèche et au niveau de l'angle $\alpha_2$ formé par ladite mèche ou lesdites mèches entre l'entrée dudit rouleau cylindrique lisse $R_2$ et la tangente verticale audit

rouleau cylindrique lisse $R_2$ sur la même face de la dite mèche mais l'épanouissement permet aussi d'imprégner l'autre face.

Avantageusement, ladite mèche dans ce mode de réalisation est sujette à un épanouissement au niveau de chaque angle $\alpha_1$ et $\alpha_2$.

La figure 7 présente un exemple de mode de réalisation avec deux rouleaux cylindriques lisses $R_1$ et $R_2$ au même niveau l'un par rapport à l'autre.

Selon un autre mode de réalisation de la deuxième variante, lorsque deux rouleaux cylindriques lisses sont présents alors la distance entre les deux rouleaux cylindriques lisses $R_1$ et $R_2$ est comprise de 0,15 mm à la longueur équivalente à la dimension maximale de la cuve, préférentiellement comprise de 10mm à 50mm et la différence de hauteur entre les deux rouleaux cylindriques lisses $R_1$ et $R_2$ est comprise de 0 à la hauteur correspondant à la hauteur maximale de la cuve soustraite des diamètres des deux rouleaux cylindriques lisses, préférentiellement comprise de 0,15mm à la hauteur correspondant à la hauteur maximale de la cuve soustraite des diamètres des deux rouleaux cylindriques lisses, plus préférentiellement à une différence de hauteur comprise entre 10mm et 300mm, $R_2$ étant le rouleau cylindrique lisse supérieur.

Avantageusement, lorsque deux rouleaux cylindriques lisses sont présents et au même niveau l'un par rapport à l'autre, le niveau de ladite poudre dans ledit lit fluidisé est au moins situé à la mi-hauteur desdits deux rouleaux cylindriques lisses.

La figure 8 décrit un mode de réalisation, sans être limité à celui-ci, à deux rouleaux cylindriques lisses $R_1$ et $R_2$, $R_1$ précédant $R_2$, avec une cuve (20) comprenant un lit fluidisé (22) dans lequel deux rouleaux cylindriques lisses cylindriques à des niveaux différents sont présents et montrant l'angle $\alpha_1$ et $\alpha_2$.

Le diamètre des rouleaux cylindriques lisses $R_1$ et $R_2$ est présenté comme identique sur les figures 5, 6, 7 et 8 mais le diamètre de chaque rouleau cylindrique lisse cylindrique peut être différent, le diamètre du rouleau cylindrique lisse $R_1$ pouvant être supérieur ou inférieur à celui du rouleau cylindrique lisse $R_2$ dans la gamme telle que définie ci-dessus.

Avantageusement, le diamètre des deux rouleaux cylindriques lisses est identique.

On ne sortirait pas du cadre de l'invention si le rouleau cylindrique lisse $R_1$ était supérieur au rouleau cylindrique lisse $R_2$.

Selon une troisième variante, lorsque deux rouleaux cylindriques lisses sont présents et à des niveaux différents, alors au moins un troisième rouleau cylindrique lisse $R_3$ est de plus présent et situé entre les rouleaux cylindriques lisses $R_1$ et $R_2$ dans le sens de la hauteur (figure 9).

Avantageusement ladite mèche ou lesdites mèches est(sont) en contact en entrée avec une partie ou la totalité de la surface dudit rouleau cylindrique lisse $R_1$ puis avec une partie ou la totalité de la surface dudit

rouleau cylindrique lisse $R_3$ et ressort(ent) après avoir été en contact avec une partie ou la totalité de la surface dudit rouleau cylindrique lisse $R_2$.

Avantageusement, ladite pré-imprégnation est effectuée sur une face de ladite mèche ou desdites mèches au niveau de l'angle $\alpha_1$ formé par ladite mèche ou lesdites mèches entre l'entrée dudit au moins un rouleau cylindrique lisse $R_1$ et la tangente verticale au rouleau cylindrique lisse $R_1$ ainsi qu'au niveau de l'angle $\alpha_3$ formé par ladite mèche ou lesdites mèches et la tangente verticale au rouleau cylindrique lisse $R_3$ et sur l'autre face qu'au niveau de l'angle $\alpha_2$ formé par ladite mèche ou lesdites mèches et la tangente verticale au rouleau cylindrique lisse $R_2$.

Avantageusement, lorsque deux rouleaux cylindriques lisses sont présents à des niveaux différents et qu'au moins un troisième rouleau cylindrique lisse $R_3$ est de plus présent, alors l'angle $\alpha_2$ formé par ladite mèche ou lesdites mèches entre l'entrée dudit au moins un rouleau cylindrique lisse $R_2$ et la tangente verticale audit rouleau cylindrique lisse $R_2$, est compris de 180° à 45°, en particulier de 120° à 60°.

Avantageusement, l'angle $\alpha_3$ est compris de 0° à 180°, avantageusement de 45° à 135°.

La figure 9 décrit un mode de réalisation, sans être limité à celui-ci, avec une cuve (20) comprenant un lit fluidisé (22) à deux rouleaux cylindriques lisses $R_1$ et $R_2$, $R_1$ précédant $R_2$, et un troisième rouleau cylindrique lisse $R_3$ et montrant les angles $\alpha_1$, $\alpha_2$ et $\alpha_3$.

Le diamètre des rouleaux cylindriques lisses $R_1$, $R_2$ et $R_3$ est présenté comme identique sur la figure 9 mais le diamètre de chaque rouleau cylindrique lisse cylindrique peut être différent, ou deux rouleaux cylindriques lisses peuvent avoir le même diamètre et le troisième un diamètre différent supérieur ou inférieur, dans la gamme telle que définie ci-dessus.

Avantageusement, le diamètre des trois rouleaux cylindriques lisses est identique.

Avantageusement, dans cette troisième variante, un deuxième contrôle de l'épanouissement de ladite mèche ou desdites mèches est effectué au niveau du rouleau cylindrique lisse $R_3$ et un troisième contrôle de l'épanouissement est effectué au niveau du rouleau cylindrique lisse $R_3$.

Le temps de séjour dans cette troisième variante est tel que défini ci-dessus.

Avantageusement, dans cette troisième variante, le niveau de ladite poudre dans ledit lit fluidisé est au moins situé à la mi-hauteur dudit rouleau cylindrique lisse $R_2$.

On ne sortirait pas du cadre de l'invention si dans cette troisième variante, ladite mèche ou lesdites mèches est(sont) en contact en entrée avec une partie ou la totalité de la surface dudit rouleau cylindrique lisse $R_1$ puis avec une partie ou la totalité de la surface dudit rouleau cylindrique lisse $R_2$ et ressort(ent) après avoir été en contact avec une partie ou la totalité de la surface dudit rouleau cylindrique lisse $R_3$.

Selon un mode de réalisation avantageux, la présente invention concerne un procédé tel que ci-dessus défini caractérisé en ce qu'une seule matrice polymère thermoplastique est utilisée et la poudre de polymère thermoplastique est fluidisable.

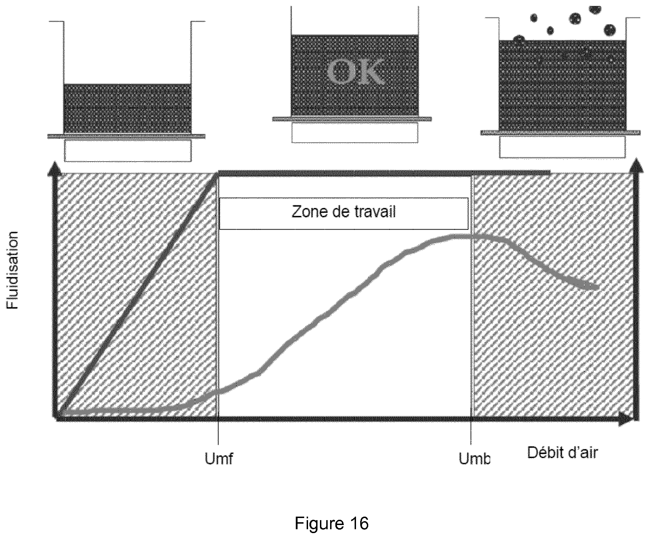

Le terme « fluidisable » signifie que le débit d'air appliqué au lit fluidisé est compris entre le débit minimum de fluidisation (Umf) et le débit minimum de bullage (Umf) tel que représenté figure 16.

En dessous du débit minimum de fluidisation, il n'y pas de fluidisation, les particules de poudre de polymère tombent dans le lit et ne sont plus en suspension et le procédé selon l'invention ne peut fonctionner.

Au-dessus du débit minimum de bullage, les particules de poudre s'envolent et la composition du lit fluidisé constante ne peut plus être maintenue constante.

Avantageusement, le diamètre en volume D90 des particules est compris 50 à 500 $\mu$m, avantageusement de 120 à 300 $\mu$m.

Avantageusement, le diamètre en volume D10 des particules est compris de 5 à 200 $\mu$m, avantageusement de 35 à 100 $\mu$m.

Avantageusement, le diamètre en volume des particules de poudre est compris dans le ratio D90/D10, soit compris de 1,5 à 50, avantageusement de 2 à 10.

Avantageusement, le diamètre moyen D50 en volume des particules de poudre de polymère thermoplastique est compris de 30 à 300 $\mu$m, notamment de 50 à 200 $\mu$m, plus particulièrement de 70 à 200$\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux. Le « D90 » correspond à la valeur à 90% de la courbe cumulée de la distribution granulométrique en volume.

Le « D10 » correspond à la correspond à la taille de 10% du volume des particules.

Selon un autre mode de réalisation du procédé selon l'invention, un cantre est présent avant la cuve comprenant un lit fluidisé pour le contrôle de la tension de ladite mèche ou desdites mèches à l'entrée de la cuve comprenant un lit fluidisé.

Optionnellement, dans le procédé selon l'invention, un ou plusieurs embarrages sont présents après la cuve comprenant le lit fluidisé.

**Etape de chauffage**

Dans un autre mode de réalisation, la présente invention concerne un procédé tel que défini ci-dessus caractérisé en ce qu'il comprend de plus au moins une étape de chauffage de la matrice thermoplastique permettant la fusion ou le maintien en fusion dudit polymère thermoplastique après pré-imprégnation,
ladite au moins une étape de chauffage étant effectuée au moyen d'au moins une pièce d'embarrage (E) conductrice ou non de la chaleur et d'au moins un système de chauffage, à l'exception d'une calandre chauffante, ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

On ne sortirait pas du cadre de l'invention si la pièce d'embarrage (E) était positionnée dans un four comportant un système de chauffage, par exemple par IR mais que ladite pièce d'embarrage n'était pas positionnée exactement sous les éléments chauffant par exemple par IR. On ne sortirait pas de l'invention si le four comportait un mode de chauffage par convection et un système de chauffage par IR. On ne sortirait pas de l'invention non plus si ladite pièce d'embarrage (E) placée dans ce four ou dans l'environnement de ce four, était équipée d'un moyen de chauffage autonome comme une résistance permettant de chauffer ladite pièce d'embarrage (E), indépendamment par exemple du rayonnement des lampes IR et de la convection naturelle du four et que, compte tenu la vitesse de la ligne, le polymère présent dans les rubans ou les mèches soit encore à l'état fondu lorsqu'il arrive en contact avec ladite pièce d'embarrage.

La hauteur entre le système de chauffage et les embarrages est comprise de 1 à 100 cm, préférentiellement de 2 à 30 cm, en particulier de 2 à 10 cm.

Une première étape de chauffage peut être immédiatement consécutive à l'étape de pré-imprégnation ou alors d'autres étapes peuvent intervenir entre l'étape de pré-imprégnation et l'étape de chauffage.

Néanmoins, la première étape de mise en oeuvre par un système de chauffage muni d'au moins une pièce d'embarrage (E) ne correspond pas à une calandre chauffante, et est toujours effectuée avant l'étape de calandrage qui est nécessaire pour lisser et mettre en forme le ruban.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi une lampe infrarouge, une lampe UV et un chauffage par convection si la pièce d'embarrage est conductrice de la chaleur.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge.

Avantageusement, si la pièce d'embarrage n'est pas conductrice de la chaleur, ledit au moins un système de chauffage est choisi parmi un chauffage micro-onde, un chauffage laser, et un chauffage Hautes Fréquences (HF).

La pièce d'embarrage (E) non chauffante et non conductrice de la chaleur n'absorbe pas à la longueur d'onde du système de chauffage micro-onde, laser ou HF.

Avantageusement, ledit au moins un système de chauffage est choisi parmi un chauffage micro-onde.

Avantageusement, ladite au moins une pièce d'embarrage (E) est un rouleau de compression R'i de forme convexe, concave ou cylindrique.

Il faut noter que les rouleaux de compression correspondant aux pièces d'embarrage (E) ou celles utilisées pour l'étape de pré-imprégnation peuvent être identiques ou différents que ce soit au niveau du matériau ou de la forme et ses caractéristiques (diamètre, longueur, largeur, hauteur... en fonction de la forme).

La forme convexe est favorable à l'épanouissement alors que la forme concave est défavorable à l'épanouissement bien qu'il s'effectue néanmoins.

La au moins une pièce d'embarrage (E) peut également être une alternance de forme convexe et concave. Dans ce cas, le défilement de la mèche sur un rouleau de compression de forme convexe provoque l'épanouissement de ladite mèche puis le défilement de la mèche sur un rouleau de compression de forme concave provoque la rétractation de la mèche et ainsi de suite permettant si besoin d'améliorer l'homogénéité de l'imprégnation, notamment à coeur.

L'expression « rouleau de compression » signifie que la mèche qui défile s'appuie partiellement ou totalement sur la surface dudit rouleau de compression, ce qui induit l'épanouissement de ladite mèche.

Les rouleaux peuvent être en rotation contrôlée ou fixes.

Plusieurs rouleaux peuvent être présents et s'ils sont en rotation contrôlée, ils peuvent être co-rotatif ou contra-rotatif.

## Etape de mise en forme

Optionnellement, une étape de mise en forme de la mèche ou desdites mèches parallèles dudit matériau fibreux imprégné est effectuée.

Un système de calandrage tel que décrit dans WO 2015/121583 peut être utilisé.

Avantageusement, elle est effectuée par calandrage au moyen d'au moins une calandre chauffante sous forme de ruban ou nappe unique unidirectionnel ou d'une pluralité de rubans ou nappe parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulés par un système asservi.

Cette étape est toujours effectuée après l'étape de chauffage s'il n'y en a qu'une ou bien entre la première étape de chauffage et la deuxième étape de chauffage lorsque les deux coexistent.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Selon un autre mode de réalisation, une presse à bande est présente entre le système de chauffage et la calandre.

Selon encore un autre mode de réalisation, une filière chauffante est présente entre le système de chauffage et la calandre.

Selon un autre mode de réalisation, une presse à bande est présente entre le système de chauffage et la calandre et une filière chauffante est présente entre la presse à bande et la calandre.

Avantageusement, l'étape de mise en forme de ladite mèche ou desdites mèches parallèles dudit matériau fibreux imprégné, par calandrage au moyen d'au moins une calandre chauffante sous forme de ruban ou nappe unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Dans un mode de réalisation, ladite (ou lesdites) calandre(s) chauffante(s) est (sont) couplée(s) à un dispositif de chauffage complémentaire, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

Dans un autre mode de réalisation, ladite ou lesdites étape(s) de pré-imprégnation est(sont) complétée(s) par une étape de recouvrement de ladite mèche unique ou de ladite pluralité de mèches parallèles après pré-imprégnation par la poudre, ladite étape de recouvrement étant réalisée avant ladite étape de calandrage, par un polymère thermoplastique fondu, pouvant être identique ou différent dudit polymère sous forme de poudre en lit fluidisé, ledit polymère fondu étant de préférence de même nature que ledit polymère sous forme de poudre en lit fluidisé, de préférence avec ledit recouvrement s'effectuant par extrusion en tête d'équerre par rapport à ladite mèche unique ou à ladite pluralité de mèches parallèles.

Selon un autre aspect, la présente invention concerne un ruban ou une nappe unidirectionnel de matériau fibreux pré-imprégné, en particulier ruban ou nappe enroulé sur bobine, caractérisé en ce qu'il(elle) est obtenu(e) par un procédé tel que défini ci-dessus.

Avantageusement, le ruban ou la nappe a une largeur (I) et une épaisseur (ep) adaptées à une dépose par robot dans la fabrication de pièces en trois dimensions, et de préférence a une largeur (I) d'au moins 5 mm et pouvant aller jusqu'à 600mm, de préférence comprise entre 50 et 600 mm et de manière encore plus préférée comprise entre 50 et 300mm.

La dépose par robot peut être effectuée avec ou sans refente.

Avantageusement, le polymère thermoplastique du ruban ou de la nappe est un polyamide choisi parmi notamment un polyamide aliphatique tel que choisi PA 6, PA 11, PA 12, PA 66, PA 46, PA 610, PA 612, PA 1010, PA 1012, PA 11/1010 ou PA 12/1010 ou un polyamide semi-aromatique tel qu'un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, un PVDF, un PEEK, PEKK et un PEI ou un mélange de ceux-ci.

Selon un autre aspect, la présente invention concerne l'utilisation du procédé tel que défini ci-dessus, pour la fabrication de rubans ou de nappes calibrés adaptés à la fabrication de pièces composites en trois dimensions, par dépose automatique desdit(e)s rubans ou nappes au moyen d'un robot.

Selon un autre aspect, la présente invention concerne l'utilisation du ruban ou de la nappe de matériau fibreux imprégné, tel que défini(e) ci-dessus, dans la fabrication de pièces composites en trois dimensions.

Ledit ruban imprégné est donc obtenu à partir d'un ruban pré-imprégné après l'étape de chauffage décrite ci-dessus.

Avantageusement, ladite fabrication desdites pièces composites concerne les domaines des transports, en particulier automobile, du pétrole et du gaz, en particulier l'offshore, du stockage de gaz, aéronautique civile ou militaire, aérospatiale, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la sécurité et de l'électronique.

Selon encore un autre aspect, la présente invention concerne une pièce composite en trois dimensions, caractérisée en ce qu'elle résulte de l'utilisation d'au moins un ruban unidirectionnel de matériau fibreux imprégné tel que défini ci-dessus.

**Modes de réalisation avantageux du procédé de l'invention**

Avantageusement, le matériau fibreux est choisi parmi la fibre de carbone et la fibre de verre.

Avantageusement, le polymère thermoplastique utilisé pour imprégner la fibre de carbone est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, un PVDF, un PEEK, PEKK et un PEI ou un mélange de ceux-ci.

Avantageusement, le polymère thermoplastique utilisé pour imprégner la fibre de verre est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, un PVDF, un PEEK, PEKK et un PEI ou un mélange de ceux-ci.

Avantageusement, le taux de fibres dans ledit matériau fibreux, constitué de fibre de carbone ou de verre, imprégné est compris de 45 à 65% en volume, de préférence de 50 à 60% en volume, en particulier de 54 à 60% en volume.

**Description des figures**

La figure 1 présente un schéma d'une unité de mise en oeuvre du procédé de fabrication d'un matériau fibreux pré-imprégné selon l'invention.
La figure 2 présente un schéma en coupe de deux rouleaux constitutifs d'une calandre telle qu'utilisée dans l'unité de la Figure 1.

La figure 3 détaille une cuve (20) comprenant un lit fluidisé (22) avec une pièce d'embarrage, réglable en hauteur (82). Le bord de l'entrée de la cuve est équipé d'un rouleau rotatif 83a sur lequel défile la mèche 81a et le bord de la sortie cuve est équipé d'un rouleau rotatif 83b sur lequel défile la mèche 81b.

La figure 4 présente décrit un mode de réalisation à un seul rouleau cylindrique lisse, avec une cuve (20) comprenant un lit fluidisé (22) dans lequel un seul rouleau cylindrique lisse cylindrique est présent et montrant l'angle $\alpha_1$.

Les flèches au niveau de la fibre indiquent le sens de défilement de la fibre.

La figure 5 présente un mode de réalisation, sans être limité à celui-ci, à deux rouleaux cylindriques lisses $R_1$ et $R_2$, $R_1$ précédant $R_2$, avec une cuve (20) comprenant un lit fluidisé (22) dans lequel les deux rouleaux cylindriques lisses cylindriques sont à des hauteurs différentes par rapport au fond de la cuve ($R_2$ à une hauteur $H_2$ au-dessus de $R_1$ à une hauteur $H_1$) sont présents et montrant l'angle $\alpha_1$ et $\alpha_2$.

Les flèches au niveau de la mèche de fibre indiquent le sens de défilement de la mèche.

La figure 6 présente un exemple de mode de réalisation avec une cuve (20) comprenant un lit fluidisé (22) dans lequel les deux rouleaux cylindriques lisses $R_1$ et $R_2$ sont cylindriques, au même niveau l'un par rapport à l'autre et côte à côte et montrant l'angle $\alpha_1$, et l'angle $\alpha_2 = 0°$ et la mèche passant entre les 2 rouleaux)

La figure 7 présente un exemple de mode de réalisation avec une cuve (20) comprenant un lit fluidisé (22) dans lequel les deux rouleaux cylindriques lisses $R_1$ et $R_2$ sont cylindriques, au même niveau l'un par rapport à l'autre et côte à côte et montrant l'angle $\alpha_1$, et l'angle $\alpha_2 = 90°$et la mèche passant au-dessous de $R_2$.

La figure 8 présente un exemple de mode de réalisation avec une cuve (20) comprenant un lit fluidisé (22) dans lequel deux rouleaux cylindriques lisses cylindriques $R_1$ et $R_2$, $R_1$ précédant $R_2$, à des niveaux différents sont présents et montrant l'angle $\alpha_1$ et $\alpha_2$ et la mèche passant sous le rouleau R2.

La figure 9 présente un mode de réalisation avec une cuve (20) comprenant un lit fluidisé (22) à deux rouleaux cylindriques lisses $R_1$ et $R_2$, $R_1$ précédant $R_2$, et un rouleau cylindrique lisse $R_3$ et montrant les angles $\alpha_1$, $\alpha_2$ et $\alpha_3$.

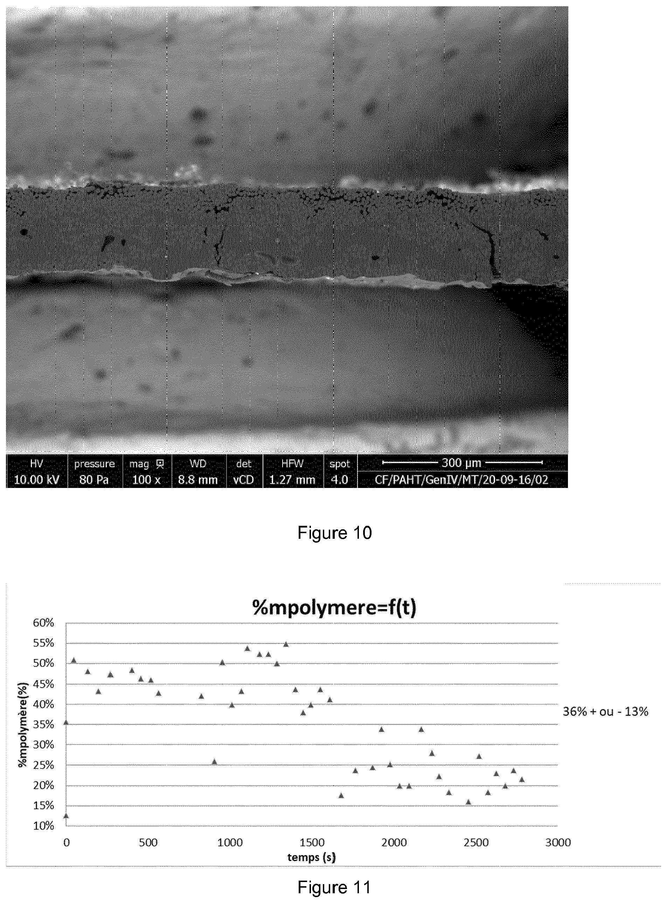

La figure 10 présente une photo prise au microscope électronique à balayage d'une vue en coupe d'une une tape de 1/4" obtenue à partir d'une mèche de fibre de carbone de 12K non ensimée, pré-imprégnée par une poudre de polyamide PA MPMDT/10T (67/33 %molaire) de D50 = 115$\mu$m selon le procédé de WO2018115736 (tel que décrit dans l'exemple comparatif 1), avec un rouleau lisse et avec une faible tension à l'entrée du lit fluidisé de 800g. Les fibres ont ensuite été imprégnées à coeur après fusion de la poudre afin d'obtenir la tape de 1/4".

L'analyse d'image donne un taux de porosité de 5 % en excluant les bords du tape. L'analyse d'image a été faite sur un nombre statistiquement représentatif de micrographies telle que celle présentée figure 10.

La figure 11 présente l'évolution du pourcentage massique de MPMDT/10T imprégné dans la mèche en fonction du temps de l'exemple comparatif 1.

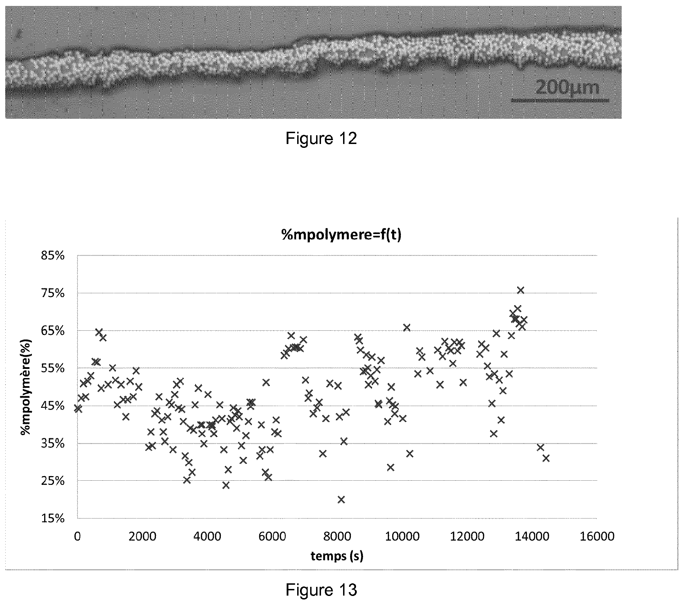

La figure 12 présente une photo prise au microscope électronique à balayage d'une vue en coupe d'une tape ¼" obtenue à partir d'une mèche de fibre de carbone de 12K ensimée, pré-imprégnée par une poudre de polyamide PA MPMDT/10T (67/33 %molaire) de D50 = 115$\mu$m selon le procédé de WO2018115736 (tel que décrit dans l'exemple 2) avec un rouleau non lisse et avec une faible tension à l'entrée du lit fluidisé de 800g. Les fibres ont ensuite été imprégnées à coeur après fusion de la poudre afin d'obtenir la tape de 1/4".

L'analyse d'image donne un taux de porosité de 1.5 % en excluant les bords du tape. L'analyse d'image a été faite sur un nombre statistiquement représentatif de micrographies telle que celle présentée figure 12.

La figure 13 présente l'évolution du pourcentage massique de MPMDT/10T (67/33 %molaire) imprégné dans la mèche en fonction du temps de l'exemple 2.

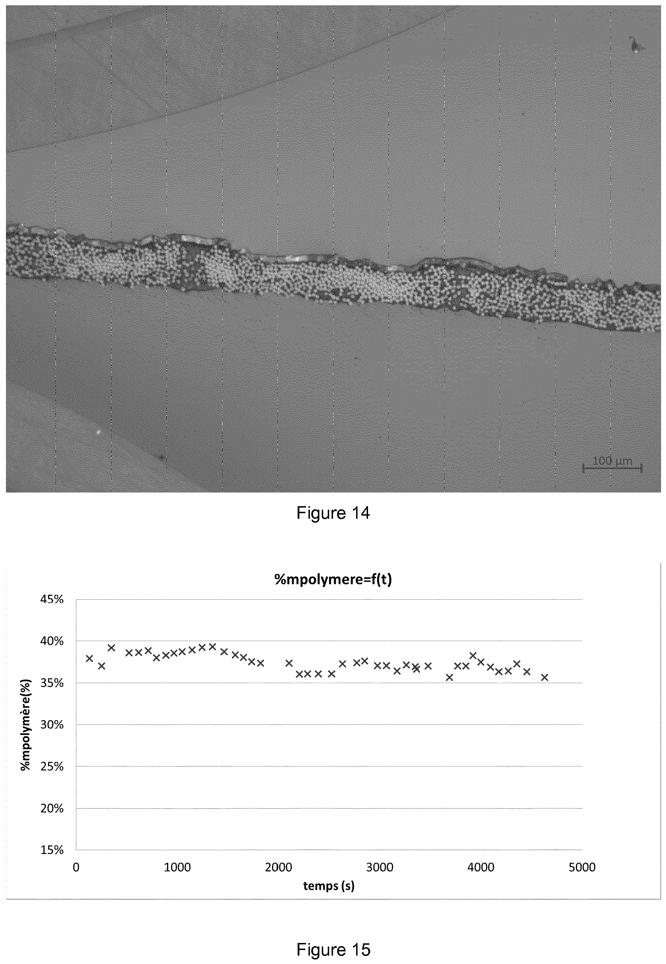

La figure 14 présente une photo prise au microscope électronique à balayage d'une vue en coupe d'une tape ¼" obtenue à partir d'une mèche de fibre de carbone 12K non ensimée, imprégnée par une poudre de polyamide PA MPMDT/10T (67/33 %molaire) de D50 = 115$\mu$m selon le procédé de WO2018115736 (tel que décrit dans l'exemple comparatif 3) avec un rouleau lisse et avec une forte tension à l'entrée du lit fluidisé >1000g (1100g).

L'analyse d'image donne un taux de porosité de 1,9 % en excluant les bords du tape. L'analyse d'image donne un taux de porosité de 1.9 % en excluant les bords du tape. L'nalayse d'image a été faite sur un nombre statisquement représentatif de micrographies telle que celle présentée figure 14.

La figure 15 présente l'évolution du pourcentage massique de MPMDT/10T (67/33 %molaire) imprégné dans la mèche non ensimée sous forte tension, en fonction du temps de l'exemple comparatif 3. Les fibres ont ensuite été imprégnées à coeur après fusion de la poudre afin d'obtenir la tape de 1/4".

La figure 16 présente la fluidisation en fonction du débit d'air. Le débit d'air appliqué au lit fluidisé doit être compris entre le débit minimum de fluidisation (Umf) et le débit minimum de bullage (Umf) Les exemples suivants illustrent de façon non limitative la portée de l'invention.

**Exemple 1 comparatif : mode opératoire générale de pré-imprégnation d'un matériau fibreux (fibre de carbone non ensimée) par une poudre de MPMDT/10T (67/33 % molaire) en lit fluidisé avec un seul rouleau cylindrique lisse et avec une faible tension de la mèche (800g) à l'entrée du lit fluidisé.**

Le mode opératoire suivant a été effectué:

- Un rouleau cylindrique lisse dans la cuve (L= 500 mm, l= 500mm, H= 600mm), diamètre 25 mm.
- Tension de la mèche à l'entrée du lit fluidisé : 800g
- Temps de séjour de 0,3 sec dans la poudre
- Angle $\alpha_1$ de 25°
- Epanouissement environ 100 % (soit une largeur multipliée par 2) pour une mèche en fibre de carbone Hexcel 12K AS4 (non ensimée).
- D50 =115 $\mu$m, (D10=49$\mu$m, D90= 207$\mu$m) pour la poudre de MPMDT/10T.
- bord de la cuve équipé d'un rouleau fixe.

Le matériau fibreux (mèche de fibre de carbone de 12K) a été pré-imprégné par du MPMDT/10T de granulométrie ci-dessus définie selon ce mode opératoire puis les fibres ont été imprégnées à coeur après fusion de la poudre afin d'obtenir une tape de 1/4" qui est présentée dans la figure 10.

Les résultats obtenus montrent que le taux de polymère imprégné n'est pas stable au cours du temps (voir figure 11). La largeur de mèche dans et en sortie du lit fluide varient.

**Exemple 2 : mode opératoire générale de pré-imprégnation d'un matériau fibreux (fibre de carbone ensimée) par une poudre de polyamide en lit fluidisé avec un seul rouleau cylindrique lisse avec une faible tension de la mèche en entrée du lit fluidisé (800g)**

Le mode opératoire suivant a été effectué:

- Un rouleau cylindrique gorgé dans la cuve (L= 500 mm, l= 500mm, H= 600mm), diamètre 25 mm en fond de gorge, 5mm de profondeur de gorge.
- Tension de la mèche à l'entrée du lit fluidisé : 800g
- Temps de séjour de 0,3 sec dans la poudre
- Angle $\alpha_1$ de 25°
- Epanouissement environ 100 % (soit une largeur multipliée par 2) pour une mèche en fibre de carbone de carbone ensimée Toray, 12K T700S 31E
- D50 =115 $\mu$m, (D10=49$\mu$m, D90= 207$\mu$m) pour la poudre de MPMDT/10T (67/33 % molaire).
- bord de la cuve équipé d'un rouleau fixe.

Le matériau fibreux (mèche de fibre de carbone 12K ensimée) a été pré-imprégné par une poudre de MPMDT/10T de granulométrie ci-dessus définie selon ce mode opératoire puis les fibres ont été imprégnées à coeur après fusion de la poudre pour former une tape ¼" qui est présentée dans la figure 12..

On observe qu'en présence d'un rouleau lisse dans la poudre, et en utilisant une tension faible pour la fibre ensimée en entrée de lit fluide, le taux de polymère imprégné est stable au cours du temps (cf figure 13).

De plus, on n'observe pas de fuzz créé avant pré-imprégnation du fait de la faible tension appliquée à la fibre en entrée de lit fluide favorisant ainsi la bonne santé matière de la tape.

Cela démontre l'efficacité du procédé de pré-imprégnation par une poudre sèche en lit fluidisé avec un rouleau cylindrique lisse avec une fibre ensimée et contrôle du temps de séjour et de la tension dans la poudre par opposition à une fibre non ensimée.

**Exemple 3** : **mode opératoire générale d'imprégnation d'un matériau fibreux (fibre de carbone non ensimée) par une poudre de MPMDT/10T (67/33 % molaire) en lit fluidisé avec un seul rouleau cylindrique lisse et avec une forte tension de la mèche (1100g) à l'entrée du lit fluidisé.**

Le mode opératoire suivant a été effectué:

-  Un rouleau cylindrique lisse dans la cuve (L= 500 mm, l= 500mm, H= 600mm), diamètre 25 mm comportant un revêtement Topocrom®

-  Tension de la mèche à l'entrée du lit fluidisé : 1100g
-  Temps de séjour de 0,3 sec dans la poudre
-  Angle $\alpha_1$ de 25°
-  Epanouissement environ 100 % (soit une largeur multipliée par 2) pour une mèche en fibre de carbone de carbone Hexcel 12K AS4.
-  D50 =115 $\mu$m, (D10=49$\mu$m, D90= 207$\mu$m) pour la poudre de MPMDT/10T.
-  bord de la cuve équipé d'un rouleau fixe.

Le matériau fibreux (mèche de fibre de carbone ensimée 12K) a été pré-imprégné par une poudre de MPMDT/10T de granulométrie ci-dessus définie selon ce mode opératoire puis les fibres ont été imprégnées à coeur après fusion de la poudre pour former une tape ¼" qui est présentée dans la figure 14

On observe qu'en présence d'un rouleau lisse dans la poudre, et en utilisant une tension forte pour la fibre non ensimée en entrée de lit fluide, le taux de polymère imprégné est stable au cours du temps (cf figure 15). En outre, grâce au revêtement Topocrom la production de fuzz reste faible et acceptable malgré la forte tension.

Cela démontre l'efficacité du procédé de pré-imprégnation par une poudre sèche en lit fluidisé avec un rouleau cylindrique lisse avec une fibre non ensimée et contrôle du temps de séjour et de la forte tension dans la poudre par opposition à une fibre non ensimée sous faible tension.

**Exemple 4** : **Détermination du taux de porosité par analyse d'image**

La porosité a été déterminée par analyse d'image sur une tape de 1/4" imprégnées par du MPMDT/10T) obtenue à partir d'une mèche de fibre de carbone pré-imprégnées par une poudre de ce polymère. Elle est de 5, 1,5 ou 1,9% pour les exemples 1, 2 et 3 respectivement.

**Exemple 5** : **Détermination du taux de porosité l'écart relatif entre densité théorique et densité expérimentale (méthode générale)**

a) Les données requises sont :

-  La densité de la matrice thermoplastique
-  La densité des fibres
-  Le grammage du renfort :

  •  masse linéique (g/m) par exemple pour une tape ¼ de pouce (issu d'un seul rowing)
  •  masse surfacique (g/m$^2$) par exemple pour une tape plus large ou un tissu

b) Mesures à réaliser :
Le nombre d'échantillons doit être au minimum de 30 pour que le résultat soit représentatif du matériau étudié.

Les mesures à réaliser sont :

-  La dimension des échantillons prélevés:

  ∘ Longueur (si masse linéique connue).
  ∘ Longueur et largeur (si masse surfacique connue).

-  La densité expérimentale des échantillons prélevés :

  ∘ Mesures de masse dans l'air et dans l'eau.

-  La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001. La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l.L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

$$d_{th} = \frac{1}{\frac{1 - \%Mf_{th}}{d_m} + \frac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.

c) Evaluation de la porosité :
La porosité est alors l'écart relatif entre densité théorique et densité expérimentale.

**Revendications**

1. Procédé de fabrication d'un matériau fibreux pré-imprégné comprenant un matériau fibreux en fibres continues et au moins une matrice polymère thermoplastique, **caractérisé en ce que** ledit matériau fibreux pré-imprégné est réalisé en un ruban unique unidirectionnel ou en une pluralité de rubans parallèles unidirectionnels et **en ce que** ledit procédé comprend une étape de pré-imprégnation, en particulier homogène, dudit matériau fibreux se présentant sous forme d'une mèche (81a) ou de plusieurs mèches parallèles par ladite au moins une matrice polymère thermoplastique se présentant sous forme de poudre, ladite étape de pré-imprégnation étant effectuée par voie sèche dans une cuve (20) comprenant un lit fluidisé (22) comprenant au moins une pièce d'embarrage lisse (82), et ladite mèche ou lesdites mèches comprenant jusqu'à 2,5% en poids d'ensimage,
ladite mèche (81a) ou lesdites mèches étant en contact avec une partie ou la totalité de la surface de ladite au moins une pièce d'embarrage lisse (82),

et le contrôle du taux de ladite au moins une matrice polymère thermoplastique dans ledit matériau fibreux étant effectué par contrôle du temps de séjour dudit matériau fibreux dans la poudre et par contrôle constant de la tension de ladite mèche (81a) ou desdites mèches lorsqu'elle(s) pénètre(nt) dans le lit fluidisé, ledit lit fluidisé étant dépourvu de pièce d'embarrage gorgé.

2. Procédé selon la revendication 1, **caractérisé en ce que** ladite mèche (81a) ou lesdites mèches comprend moins de 0,1% en poids d'ensimage, en particulier ladite mèche (81a) ou lesdites mèches est(sont) non ensimées.

3. Procédé selon la revendication 2, **caractérisé en ce que** la tension de ladite mèche (81a) ou desdites mèches lorsqu'elle(s) pénètre(nt) dans le lit fluidisé est supérieure à 1000g.

4. Procédé selon la revendication 3, **caractérisé en ce que** la tension de ladite mèche (81a) ou desdites mèches lorsqu'elle(s) pénètre(nt) dans le lit fluidisé est comprise de 1000 à 1500g, en particulier de 1000 à 1200g.

5. Procédé selon la revendication 1, **caractérisé en ce que** ladite mèche (81a) ou lesdites mèches est(sont) ensimée(s) et comprend de 0,1% jusqu'à 2,5% en poids d'ensimage.

6. Procédé selon la revendication 5, **caractérisé en ce que** la tension de ladite mèche (81a) ou desdites mèches lorsqu'elle(s) pénètre(nt) dans le lit fluidisé est jusqu'à 1000g.

7. Procédé selon la revendication 6, **caractérisé en ce que** la tension de ladite mèche (81a) ou desdites mèches lorsqu'elle(s) pénètre(nt) dans le lit fluidisé est comprise de 100 à 1000g, en particulier de 500 à 1000g.

8. Procédé selon l'une des revendications 5 à 7, **caractérisé en ce que** ladite étape de pré-imprégnation est effectuée avec épanouissement simultané de ladite mèche (81a) ou desdites mèches entre l'entrée et la sortie dudit lit fluidisé (22).

9. Procédé selon l'une des revendications 1 à 8, **caractérisé en ce que** le diamètre moyen D50 en volume des particules de poudre de polymère thermoplastique étant compris de 30 à 300 $\mu$m, notamment de 50 à 200 $\mu$m, plus particulièrement de 70 à 200$\mu$m.

10. Procédé selon l'une des revendications 1 à 9, **caractérisé en ce que** le taux de fibres dans ledit matériau fibreux imprégné est compris de 45 à 65 % en volume, de préférence de 50 à 60% en volume, notamment de 54 à 60%.

**11.** Procédé selon l'une des revendications 1 à 10, **caractérisé en ce que** le temps de séjour dans la poudre est compris de 0,01s à 10s, préférentiellement de 0,1s à 5s, et en particulier de 0,1s à 3s.

**12.** Procédé selon l'une des revendications 1 et 5 à 11, **caractérisé en ce que** ladite pièce d'embarrage lisse est un rouleau cylindrique lisse et le pourcentage d'épanouissement de ladite mèche (81a) ou desdites mèches entre l'entrée et la sortie de ladite cuve étant compris de 100% à 1000%, préférentiellement de 100% à 800% préférentiellement de 100% à 500%, préférentiellement de 100% à 200%.

**13.** Procédé selon la revendication 12, **caractérisé en ce que** un seul rouleau cylindrique lisse est présent dans le lit fluidisé (22) et ladite pré-imprégnation est effectuée au niveau de l'angle $\alpha_1$ formé par ladite mèche (81a) ou lesdites mèches entre l'entrée dudit rouleau cylindrique lisse et la tangente verticale audit rouleau cylindrique lisse.

**14.** Procédé selon la revendication 13, **caractérisé en ce que** l'angle $\alpha_1$ est compris de 0 à 89°, préférentiellement 5° à 85°, préférentiellement de 5° à 45°, préférentiellement de 5° à 30°.

**15.** Procédé selon la revendication 14, **caractérisé en ce que** deux rouleaux cylindriques lisses $R_1$ et $R_2$ sont présents dans ledit lit fluidisé (22) et ladite pré-imprégnation est effectuée au niveau de l'angle $\alpha_1$ formé par ladite mèche (81a) ou lesdites mèches entre l'entrée dudit rouleau cylindrique lisse $R_1$ et la tangente verticale audit rouleau cylindrique lisse et/ou au niveau de l'angle $\alpha_2$ formé par ladite mèche (81a) ou lesdites mèches entre l'entrée dudit rouleau cylindrique lisse $R_2$ et la tangente verticale audit rouleau cylindrique lisse $R_2$, ledit rouleau cylindrique lisse $R_1$ (dans le sens de défilement du procédé) précédant ledit rouleau cylindrique lisse $R_2$ et ladite mèche (81a) ou lesdites mèche pouvant passer au-dessus ou en dessous du rouleau $R_2$.

**16.** Procédé selon la revendication 15, **caractérisé en ce que** les deux rouleaux cylindriques lisses $R_1$ et $R_2$ sont distants de 0,15 mm à la longueur équivalente à la dimension maximale de la cuve (20), préférentiellement distants de 10mm à 50mm et **en ce que** la différence de hauteur entre les deux rouleaux cylindriques lisses $R_1$ et $R_2$ est comprise de 0 à la hauteur correspondant à la hauteur maximale de la cuve (20) soustraite des diamètres des deux rouleaux cylindriques lisses, préférentiellement comprise de 0,15mm à la hauteur correspondant à la hauteur maximale de la cuve (20) soustraite des diamètres des deux rouleaux cylindriques lisses, plus préférentiellement à une différence de hauteur comprise entre 10mm et 300mm, $R_2$ étant le rouleau cylindrique lisse supérieur.

**17.** Procédé selon l'une des revendications 1 à 16, **caractérisé en ce qu'**une seule matrice polymère thermoplastique est utilisée et la poudre de polymère thermoplastique est fluidisable.

**18.** Procédé selon l'une des revendications 1 à 17, **caractérisé en ce qu'**il comprend de plus au moins une étape de chauffage de la matrice thermoplastique permettant la fusion ou le maintien en fusion dudit polymère thermoplastique après pré-imprégnation, ladite au moins une étape de chauffage étant effectuée au moyen d'au moins une pièce d'embarrage (E) conductrice ou non de la chaleur et d'au moins un système de chauffage, à l'exception d'une calandre chauffante, ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

**19.** Procédé selon l'une des revendications 1 à 18, **caractérisé en ce qu'**il comprend de plus une étape de mise en forme de ladite mèche ou desdites mèches parallèles dudit matériau fibreux pré-imprégné, par calandrage au moyen d'au moins une calandre chauffante sous forme de ruban unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

**20.** Procédé selon la revendication 19, **caractérisé en ce que** l'étape de calandrage est réalisée au moyen d'une pluralité de calandres (51, 52, 53) chauffantes, montées en parallèle et/ou en série par rapport au sens de défilement des mèches (81a) de fibres.

**21.** Procédé selon l'une des revendications 19 ou 20, **caractérisé en ce que** ladite (ou lesdites) calandre(s) chauffante(s) (51, 52, 53) comprend (comprennent) un système de chauffage intégré par induction ou par microondes, de préférence par microondes, couplé à la présence de charges carbonées dans ledit polymère thermoplastique ou mélange de polymères thermoplastiques.

**22.** Procédé selon l'une des revendications 19 à 21, **caractérisé en ce que** ladite (ou lesdites) calandre(s) chauffante(s) (51, 52, 53) est (sont) couplée(s) à un dispositif de chauffage complémentaire rapide (41, 42, 43), situé avant et/ou après ladite (chaque) calandre (51, 52, 53), en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

**23.** Procédé selon l'une des revendications 1 à 22, **caractérisé en ce que** ladite ou lesdites étape(s) de pré-imprégnation est(sont) complétée(s) par une étape de recouvrement de ladite mèche (81a) unique ou de ladite pluralité de mèches parallèles après pré-imprégnation par la poudre, ladite étape de recouvrement étant réalisée avant ladite étape de calandrage, par un polymère thermoplastique fondu, pouvant être identique ou différent dudit polymère sous forme de poudre en lit fluidisé (22), ledit polymère fondu étant de préférence de même nature que ledit polymère sous forme de poudre en lit fluidisé (22), de préférence avec ledit recouvrement s'effectuant par extrusion en tête d'équerre par rapport à ladite mèche (81a) unique ou à ladite pluralité de mèches parallèles.

**24.** Procédé selon l'une des revendications 1 à 23, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

**25.** Procédé selon l'une des revendications 1 à 24, **caractérisé en ce que** le dit polymère thermoplastique comprend en outre des polymères à cristaux liquides ou du poly(butylène téréphtalate) cyclisé, ou des mélanges en contenant comme additifs.

**26.** Procédé selon l'une des revendications 1 à 25, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

**27.** Procédé selon la revendication 26, **caractérisé en ce que** ledit au moins polymère thermoplastique est un polymère dont la température de transition vitreuse est telle que Tg ≥ 80°C ou un polymère semicristallin dont la température de fusion Tf ≥ 150°C.

**28.** Procédé selon l'une des revendications 1 à 27, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

**29.** Ruban unidirectionnel de matériau fibreux imprégné, en particulier ruban enroulé sur bobine, **caractérisé en ce qu'**il est obtenu par un procédé tel que défini selon l'une des revendications 18 à 28.

**30.** Ruban selon la revendication 29, **caractérisé en ce qu'**il a une largeur (l) et une épaisseur (ep) adaptées à une dépose par robot dans la fabrication de pièces en trois dimensions, sans besoin de refente, et de préférence a une largeur (l) d'au moins 5 mm et pouvant aller jusqu'à 400mm, de préférence comprise entre 5 et 50 mm et de manière encore plus préférée comprise entre 5 et 15mm.

**31.** Ruban selon l'une des revendications 29 ou 30, **caractérisé en ce que** le polymère thermoplastique est un polyamide choisi parmi notamment un polyamide aliphatique tel que choisi PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/BACT/6T, un PA 11/MPMDT/10T et un PA 11/MXDT/10T, un PVDF, un PEEK, PEKK et un PEI ou un mélange de ceux-ci.

**32.** Utilisation du procédé tel que défini selon l'une des revendications 18 à 28, pour la fabrication de rubans calibrés adaptés à la fabrication de pièces composites en trois dimensions, par dépose automatique desdits rubans au moyen d'un robot.

**33.** Utilisation du ruban de matériau fibreux imprégné, tel que défini selon l'une des revendications 29 à 31, dans la fabrication de pièces composites en trois dimensions.

**34.** Utilisation selon la revendication 33, **caractérisée en ce que** ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la sécurité et de l'électronique.

**35.** Pièce composite en trois dimensions, **caractérisée en ce qu'**elle résulte de l'utilisation d'au moins un ruban unidirectionnel de matériau fibreux imprégné tel que défini selon l'une des revendications 29 à 31.

**FIG.1**

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Europäisches
Patentamt

European
Patent Office

Office européen
des brevets

# RAPPORT DE RECHERCHE EUROPEENNE

Numéro de la demande

EP 18 30 6722

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2018/115736 A1 (ARKEMA FRANCE [FR]) 28 juin 2018 (2018-06-28) * revendications 1-30 * * page 19, ligne 14 - ligne 16 * * page 9, ligne 11 - ligne 14 * * page 28, ligne 22 - ligne 24 * ----- | 1-35 | INV. B29B15/12 |
| X | WO 2018/115737 A1 (ARKEMA FRANCE [FR]) 28 juin 2018 (2018-06-28) * revendications 1-34 * ----- | 1-35 | |
| X | WO 2018/115738 A1 (ARKEMA FRANCE [FR]) 28 juin 2018 (2018-06-28) * revendications 1-34 * ----- | 1-35 | |

DOMAINES TECHNIQUES
RECHERCHES (IPC)

B29B

Le présent rapport a été établi pour toutes les revendications

| Lieu de la recherche | Date d'achèvement de la recherche | Examinateur |
|---|---|---|
| Munich | 11 juin 2019 | Jouannon, Fabien |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 30 6722

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-06-2019

| Document brevet cité au rapport de recherche | | | Date de publication | Membre(s) de la famille de brevet(s) | | | Date de publication |
|---|---|---|---|---|---|---|---|
| WO 2018115736 | A1 | | 28-06-2018 | CN | 109070391 | A | 21-12-2018 |
| | | | | EP | 3393738 | A1 | 31-10-2018 |
| | | | | FR | 3061066 | A1 | 29-06-2018 |
| | | | | JP | 2019511593 | A | 25-04-2019 |
| | | | | KR | 20180104706 | A | 21-09-2018 |
| | | | | US | 2019084252 | A1 | 21-03-2019 |
| | | | | WO | 2018115736 | A1 | 28-06-2018 |
| WO 2018115737 | A1 | | 28-06-2018 | FR | 3061068 | A1 | 29-06-2018 |
| | | | | WO | 2018115737 | A1 | 28-06-2018 |
| WO 2018115738 | A1 | | 28-06-2018 | FR | 3061069 | A1 | 29-06-2018 |
| | | | | WO | 2018115738 | A1 | 28-06-2018 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018115736 A
- EP 1505099 A
- WO 2015121583 A
- EP 0406067 A

**Littérature non-brevet citée dans la description**

- **GIBSON A. et al.** *composites manufacturing,* 1992, vol. 3 (4